(19) Europäisches Patentamt
European Patent Office
Office européen des brevets

(11) **EP 4 633 155 A1**

(12) **EUROPEAN PATENT APPLICATION**

(43) Date of publication:
**15.10.2025 Bulletin 2025/42**

(21) Application number: **24305555.5**

(22) Date of filing: **08.04.2024**

(51) International Patent Classification (IPC):
**H04N 19/124** $^{(2014.01)}$    **H04N 19/176** $^{(2014.01)}$
**H04N 19/463** $^{(2014.01)}$    **H04N 19/467** $^{(2014.01)}$
**H04N 19/70** $^{(2014.01)}$

(52) Cooperative Patent Classification (CPC):
**H04N 19/463; H04N 19/124; H04N 19/176; H04N 19/467; H04N 19/70;** H04N 19/147; H04N 19/61

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BALCILAR, Muhammet**
  **35830 BETTON (FR)**
• **NASER, Karam**
  **35250 MOUAZE (FR)**
• **GALPIN, Franck**
  **35235 THORIGNE-FOUILLARD (FR)**
• **LE LEANNEC, Fabrice**
  **35830 BETTON (FR)**

(74) Representative: **Interdigital**
**Immeuble ZEN 2**
**845 A, avenue des Champs Blancs**
**35510 Cesson-Sévigné (FR)**

(54) **BIT HIDING ON ENHANCED STATES DEPENDENT QUANTIZATION**

(57)    A method and an apparatus for encoding or decoding a video are provided wherein for at least one group of samples of a block of the video, values of samples of the at least one group are quantized using a plurality of quantizers assigned respectively to a plurality of quantization states of a dependent quantization, and wherein the plurality of quantization states comprises more than 8 quantization states. One bit of information is implicitly encoded based on a quantization state of a last sample of the at least one group in an encoding order.

800

```
┌─────────────────────────────┐
│ Quantizing values of samples to │ —— 801
│     quantization indices        │
└─────────────────────────────┘
              │
              ▼
┌─────────────────────────────┐
│ Implicitly encoding bit in a state │ —— 802
│       of a given sample         │
└─────────────────────────────┘
              │
              ▼
┌─────────────────────────────┐
│ Entropy encoding quantization  │ —— 803
│         indices               │
└─────────────────────────────┘
```

**FIG. 8**

**Description**

TECHNICAL FIELD

The present embodiments generally relate to video compression. The present embodiments relate to a method and an apparatus for encoding or decoding an image or a video. More particularly, the present embodiments relate to improving quantization in video compression system.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

SUMMARY

According to an aspect, a method for encoding a video is provided. The method comprises, for at least one group of samples of a block of a video, quantizing values of samples of the at least one group using a plurality of quantizers assigned respectively to a plurality of quantization states of a dependent quantization, wherein the plurality of quantization states comprises more than 8 quantization states, and implicitly encoding one bit of information based on a quantization state of a last sample of the at least one group in an encoding order.
According to another aspect, an apparatus for encoding a video is provided. The apparatus comprises one or more processors operable to, for at least one group of samples of a block of a video, quantize values of samples of the at least one group using a plurality of quantizers assigned respectively to a plurality of quantization states of a dependent quantization, wherein the plurality of quantization states comprises more than 8 quantization states, and implicitly encode one bit of information based on a quantization state of a last sample of the at least one group in an encoding order.
According to an aspect, a method for decoding a video is provided. The method comprises, for at least one group of samples of a block of a video, dequantizing values of samples of the at least one group using a plurality of quantizers assigned respectively to a plurality of quantization states of a dependent quantization, wherein the plurality of quantization states comprises more than 8 quantization states, and implicitly decoding one bit of information based on a quantization state of a last sample of the at least one group in a decoding order.
According to another aspect, an apparatus for decoding a video is provided. The apparatus comprises one or more processors operable to, for at least one group of samples of a block of a video, dequantize values of samples of the at least one group using a plurality of quantizers assigned respectively to a plurality of quantization states of a dependent quantization, wherein the plurality of quantization states comprises more than 8 quantization states, and implicitly decode one bit of information based on a quantization state of a last sample of the at least one group in a decoding order.
Further embodiments that can be used alone or in combination are described herein.
One or more embodiments also provide a computer program comprising instructions which when executed by one or more processors cause the one or more processors to perform any one of the methods for encoding or decoding a video according to any of the embodiments described herein. One or more of the present embodiments also provide a non-transitory computer readable medium and/or a computer readable storage medium having stored thereon instructions for encoding or decoding a video according to the methods described herein.
One or more embodiments also provide a computer readable storage medium having stored thereon a bitstream generated according to the methods described herein. One or more embodiments also provide a method and apparatus for transmitting or receiving the bitstream generated according to the methods described above.
According to an aspect, a device is provided that comprises an apparatus for decoding a video according to any one of the embodiments described above; and at least one of (i) an antenna configured to receive or transmit a signal, the signal including data representative of the video, (ii) a band limiter configured to limit the signal to a band of frequencies that includes the data representative of the video, or (iii) a display configured to display the video.
In a variant, the device comprises at least one of a television, a cell phone, a tablet, a set-top box.

BRIEF DESCRIPTION OF THE DRAWINGS

FIG. 1A illustrates a block diagram of a system within which aspects of the present embodiments may be implemented according to an embodiment.

FIG. 1B illustrates a block diagram of a system within which aspects of the present embodiments may be implemented according to another embodiment.

FIG. 1C illustrates a block diagram of a system within which aspects of the present embodiments may be implemented according to another embodiment.

FIG. 2 illustrates a block diagram of an embodiment of a video encoder within which aspects of the present embodiments may be implemented.

FIG. 3 illustrates a block diagram of an embodiment of a video decoder within which aspects of the present embodiments may be implemented.

FIG. 4 illustrates an example of sets of reconstruction values for two quantizers $Q_0$ and $Q_1$.

FIG. 5 illustrates an example of a 4-state transition mechanism for determining a scalar quantizer used for quantizing values.

FIG. 6 illustrates an example of a trellis structure for quantizing N values using 4-state dependent quantization.

FIG. 7 illustrates an example of a trellis structure for quantizing N values using 8-state dependent quantization.

FIG. 8 illustrates an example of a method for encoding a block of a video according to an embodiment.

FIG. 9 illustrates an example of a method for decoding a block of a video according to an embodiment.

FIG. 10 shows two remote devices communicating over a communication network in accordance with an example of the present principles.

FIG. 11 shows the syntax of a signal in accordance with an example of the present principles.

<u>DETAILED DESCRIPTION</u>

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

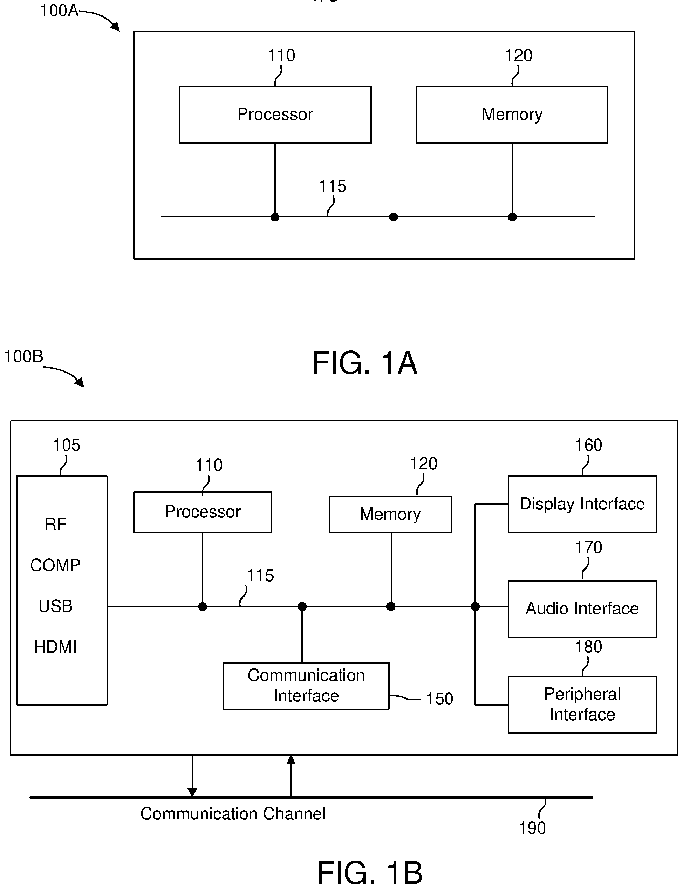

The aspects described and contemplated in this application can be implemented in many different forms. FIGs. 1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

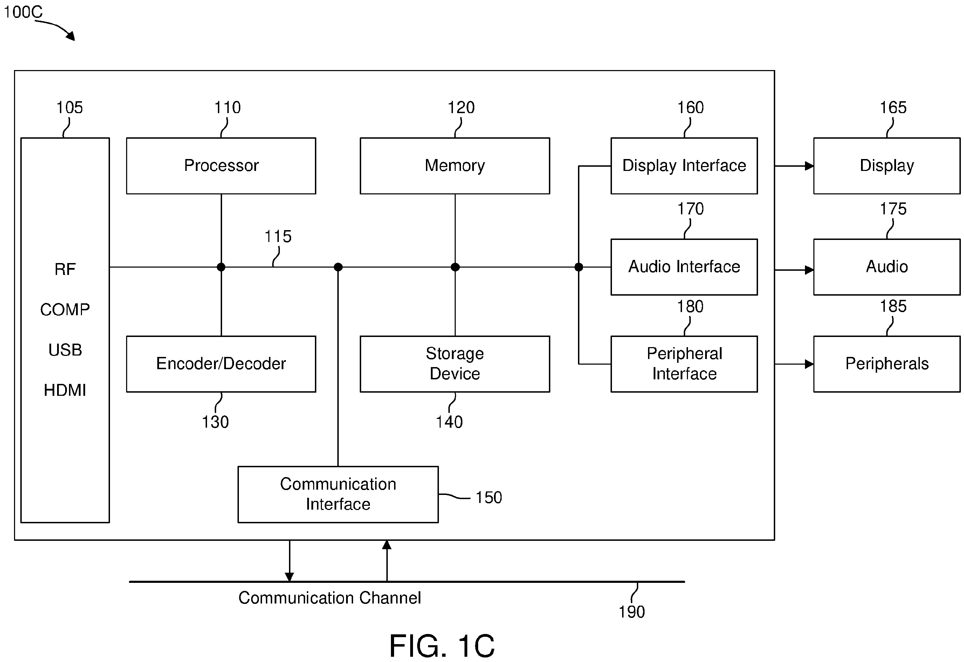

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

The various elements may be interconnected and transmit data therebetween using suitable connection arrangement 115, for example, an internal bus as known in the art, including the I2C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180.

Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentioned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the I2C bus, wiring, and printed circuit boards.

Similarly as for the system 100B of FIG. 1B, the system 100C includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV. Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

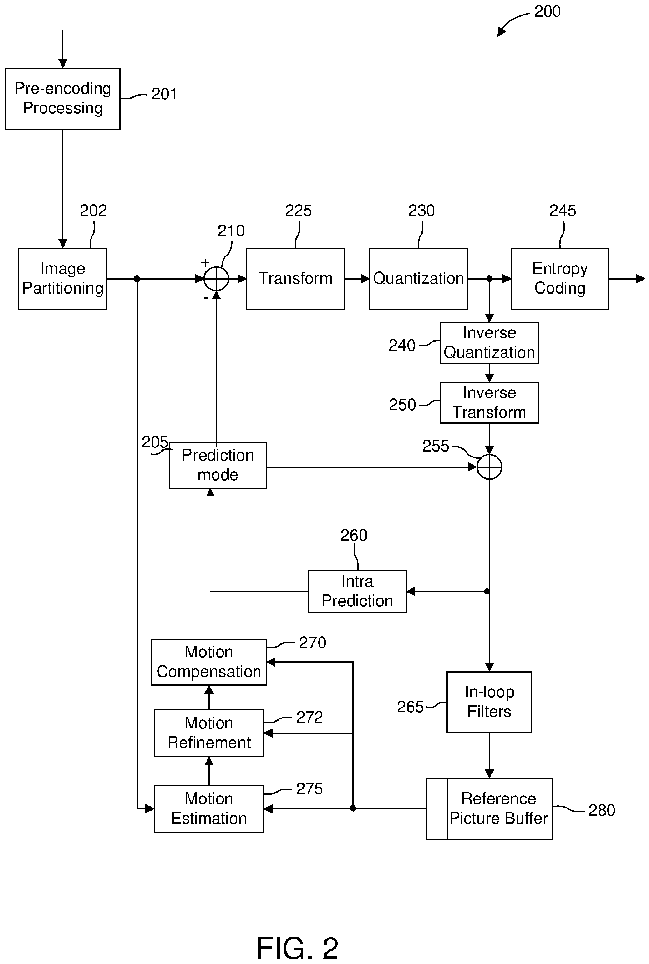

FIG. 2 illustrates an example of a block-based hybrid video encoder 200. Variations of this encoder 200 are contemplated, but the encoder 200 is described below for purposes of clarity without describing all expected variations.

In some embodiments, FIG. 2 also illustrate an encoder in which improvements are made to the HEVC standard or a VVC standard (*Versatile Video Coding, Standard ITU-T H.266, ISO/IEC 23090-3, 2020)* or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of color components), or re-sizing the picture (ex: down-scaling). Metadata can be associated with the pre-processing and attached to the bitstream.

In the encoder 200, a picture is encoded by the encoder elements as described below. The picture to be encoded is partitioned (202) and processed in units of, for example, CUs (Coding units) or blocks. In the disclosure, different expressions may be used to refer to such a unit or block resulting from a partitioning of the picture. Such wording may be coding unit or CU, coding block or CB, luminance CB, or block. A CTU (Coding Tree Unit) refers to a group of blocks or group of units or group of coding units (CUs). In some embodiments, a CTU may be considered as a block, or a unit as itself.

Each unit is encoded using, for example, either an intra or inter mode. When a unit is encoded in an intra mode, it performs intra prediction (260). In an inter mode, motion estimation (275) and compensation (270) are performed. The intra mode and/or the inter mode may comprise several distinct sub-modes. For example, the intra mode may comprise directional intra predictions, template-based intra mode derivation prediction, intra block copy prediction or others modes spatially predicting the samples values of the unit. The inter mode may comprise skip mode, merge mode according to which motion information is derived from a list of motion candidates and no motion vector prediction residual is encoded, an inter mode according to which motion information is derived from a list of motion candidates and further refined either by encoding motion vector prediction residual or by template-matching performed both at the encoder and the decoder, further inter modes are also possible. The encoder decides (205) which one of the intra mode or inter mode to use for encoding the unit. When different intra modes and/or inter modes are possible, the endoder decides (205) which of the intra modes or inter modes to use. The encoder indicates the intra/inter decision by, for example, one or more syntax element signaling the prediction mode. The encoder may also blend (205) intra prediction result and inter prediction result, or blend results from different intra/inter prediction methods. Prediction residuals are calculated, for example, by subtracting (210) the predicted block from the original image block.

The motion refinement module (272) uses already available reference picture in order to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes (reconstructs) an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, one or more of a deblocking filtering, an SAO (Sample Adaptive Offset) filtering or an ALF (Adaptive Loop Filter) filtering to reduce encoding artifacts. The filtered image is stored at a reference picture buffer (280). Such filtered image is also referred to as a reference image in the following.

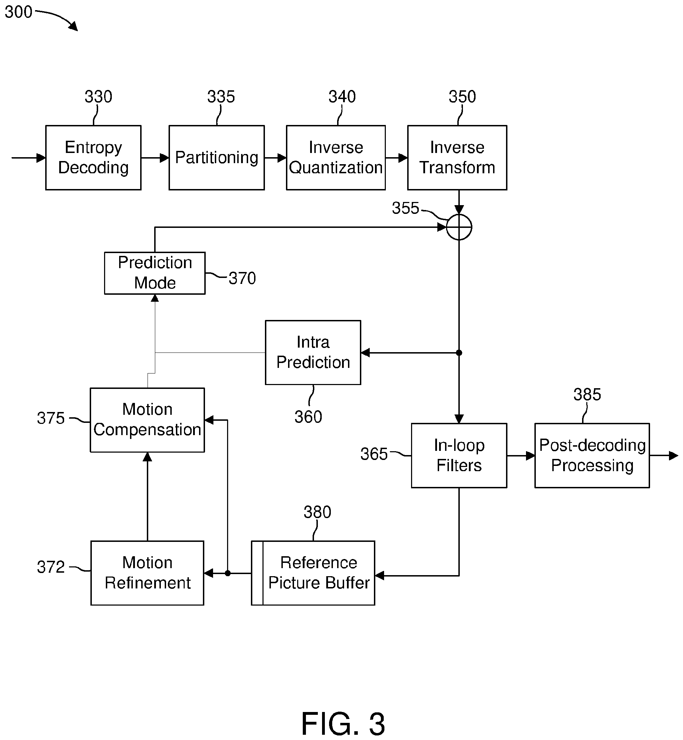

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed.

The predicted block can be obtained (370) from intra prediction (360) or motion-compensated prediction (i.e., inter prediction) (375). In a similar manner as in the encoder, intra prediction and/or inter prediction may comprise several distinct sub-modes. The decoder obtains (370) the predictor block based on one or more syntax elements signaling the prediction mode among the available intra modes and inter modes. The decoder may blend (370) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201), or re-sizing the reconstructed pictures (ex: up-scaling). The post-decoding processing can use metadata derived in the pre-encoding processing and signaled in the bitstream.

Some of the embodiments described herein relates to hiding data (bit or group of bits) during the quantization process of video data, and more particularly when Dependent Quantization (DQ) is used. Hiding some bits is a way of not signaling those bits explicitly (i.e. the bits are impliclitly encoded). This allows to decrease the bitrate of the compressed data. On the other hand, to obtain those hidden bits (not explicitly signaled bits) on the decoder side, the encoder needs to implicitly encode this information which might decrease the reconstruction quality.

Some embodiments provide a method for hiding one or more bits when using dependent quantization that provides a good trade-off between these two aspects bitrate vs reconstruction quality.

Any one of the embodiments described herein can be implemented for instance in quantization module of a video encoder and inverse quantization module of a video decoder. For instance, the embodiments described herein can be implemented in the quantization module 230 of the video encoder 200 in FIG. 2 or the inverse quantization module 340 of the video decoder 300 in FIG. 3.

The High Efficiency Video Coding (HEVC) standard specifies conventional independent scalar quantization with Uniform Reconstruction Quantizers (URQs). The reconstructed transform coefficients of URQs are completely denoted by integer multiples of a quantization step size $\Delta$. This integer specifies the associated transform coefficient level, which is transmitted as quantization indexes $q$. The mapping of quantization indexes $q$ to reconstructed transform coefficients $t'$ is given by the following relationship:

$$t' = q \times \Delta. \qquad (1)$$

For maximizing the coding efficiency, the encoder should select the quantization indexes q that minimize a Lagrangian cost function:

$$J = D + \lambda R \qquad (2)$$

where $D$ represents the distortion and $R$ is the number of bits that are required for transmitting the quantization indexes $q$; the Lagrange multiplier $\lambda$ is typically chosen based on the quantization step size $\Delta$.

In the reference encoders for the HEVC standard, Rate-Distortion Optimized Quantization (RDOQ) algorithm is used for selecting the quantization indexes $q$. It takes the dependencies between quantization indexes $q$ that are caused by the entropy coding into account.

While conventional independent scalar quantization maps one transform coefficient into one quantization index once, and the set of reconstructed transform coefficients constitutes an orthogonal lattice in the $N$-dimensional space ($N$ represents the number of transform coefficients in a transform block). It causes an unavoidable loss in coding efficiency relative to the fundamental rate-distortion bound.

This gap can only be reduced by applying some form of vector quantization. However, unconstrained vector quantization is too complex for the area of video coding, there are some variants with reasonable encoder and decoder complexity. The HEVC also includes a coding tool, called Sign Data Hiding (SDH), which can be interpreted as a type of vector quantization as described in Wang, J., Yu, X., He, D., Henry, F., & Clare, G. (2012, November). Multiple sign bits hiding for high efficiency video coding. In 2012 Visual Communications and Image Processing (pp. 1-6). IEEE.

In the quantization process of the Versatile Video Coding (VVC) and the Exploratory Coding Model (ECM), Dependent Quantization (DQ) *("Description of SDR, HDR and 360° video coding technology proposal by Fraunhofer HHI",* Document JVET J0014, 10th Meeting: San Diego, US, 10-20 Apr. 2018), also referred to as Trellis-Coded Quantization (TCQ), replaces conventional independent scalar quantization and the RDOQ to select the quantization indexes in the encoder as used in the HEVC. DQ refers to an approach in which the set of available reconstruction values for a transform coefficient depends on the values of the transform coefficient levels that precede the current transform coefficient level in reconstruction order.

From a decoder point of view, it specifies two quantizers and a procedure for switching between them. Commonly, the available reconstruction values are denoted by integer multiples of a quantization step size $\Delta$ for both scalar quantizers. One quantizer includes the even multiples of $\Delta$ and the other quantizer includes the odd multiples of $\Delta$. The switching between the two scalar quantizers can be described by a state machine with $2^K$ states ($K \geq 2$), where each state is associated with one of the scalar quantizers. The current state and, thus, the quantizer used for a current transform coefficient is uniquely determined by the previous state and the value of the previous quantization index. For encoding, the potential transitions between the two scalar quantizers can be represented by a trellis with $2^K$ states per sample. Selecting the optimal sequence of quantization indexes is equivalent to finding the trellis path with minimum rate-distortion cost. The optimal solution can be found by the Viterbi algorithm.

DQ can be considered as a vector quantizer for very large dimensions, but with a restricted set of values for the vector components. In DQ, the available reconstruction vectors are packed denser in the $N$-dimensional vector space, which provides a part of the space-filling advantage of vector quantization. That means, for a given average number of available reconstruction vectors per $N$-dimensional unit volume, the average distortion between an input vector and the closest reconstruction vector is reduced compared to the conventional scalar quantization.

The packing density in the high-dimensional signal space, and thus the coding efficiency, for long sample sequences is maximized by choosing the state transitions (state machine) properly. Furthermore, the achievable packing density, but also the encoding complexity, increases with the number of states.

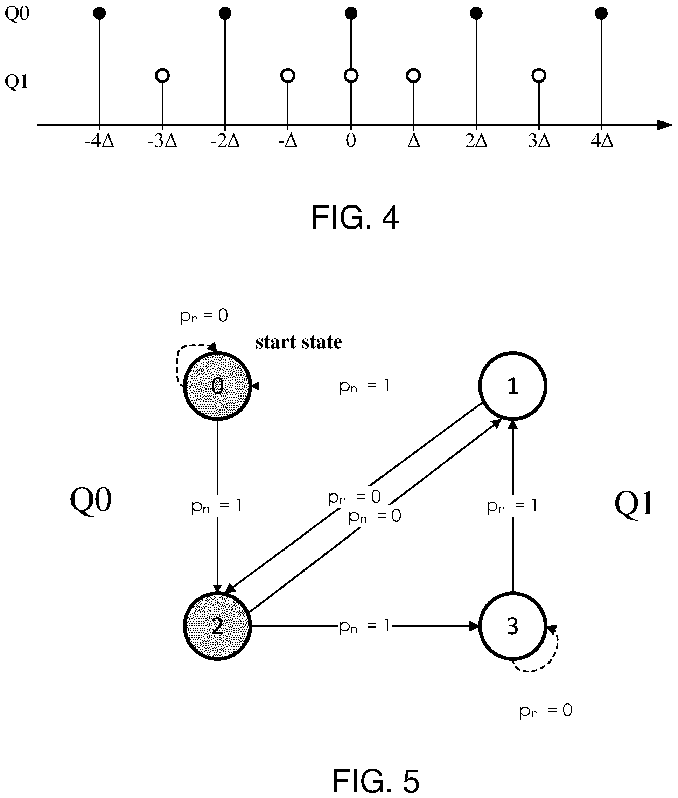

VVC standard implements a DQ with 4 states as follows. The two scalar quantizers used, denoted by $Q_0$ and $Q_1$, are illustrated in FIG. 4. The reconstruction values for $Q_0$ (filled circles) are given by the even multiples of the quantization step size $\Delta$; the reconstruction values for $Q_1$ (hollow circles) are given by the odd multiples of $\Delta$ and, in addition, the value of zero. The scalar quantizer used ($Q_0$ or $Q_1$) is not explicitly signaled in the bitstream. Instead, the quantizer used for a current transform coefficient is selected by a state machine.

In VVC, the DQ design with 4 states is chosen, which also helps to keep the encoder complexity as low as possible. The 4-state based quantizer selection process is illustrated in FIG. 5. The transform coefficients of a block have to be reconstructed in a pre-defined order, which shall be indicated by the indexes $n = 0, 1, \cdots, N - 1$. The initial state $s_0$ (for the first transform coefficient $t_0$ in coding order) is set equal to 0. Then, given a current state $s_n$ and the value of the current quantization index $q_n$, the next state $s_{n+1}$ is uniquely determined by the current state $s_n$ and the parity $p_n$ of the current quantization index $q_n$. As shown in Table 1 below, for transform coefficients $t_n$ with associated states $s_n$ equal to 0 or 1, the quantizer $Q_0$ is used; and for transform coefficients $t_n$ with states $s_n$ equal to 2 or 3, the quantizer $Q_1$ is used. Table 1 can be represented as a following 2-D array state transition table:

$$4\text{stateTransTable}[\cdot][\cdot] \ = \ \{\, \{\, 0, 2 \,\}, \{\, 2, 0 \,\}, \{\, 1, 3 \,\}, \{\, 3, 1 \,\} \,\}. \tag{3}$$

**Table 1. 4-state transitions for quantizer selection. $p_n$ represents the parity of the current quantizer index $q_n$.**

| state $s_n$ | quantizer used | next state $s_{n+1}$ | |
| --- | --- | --- | --- |
| | | $p_n = 0$ | $p_n = 1$ |
| 0 | $Q_0$ | 0 | 2 |
| 1 | $Q_0$ | 2 | 0 |
| 2 | $Q_1$ | 1 | 3 |
| 3 | $Q_1$ | 3 | 1 |

Given the $N$ quantization indexes $q_n$ of a block, with $n$ indicating the coding order, the associated reconstructed transform coefficients $t'_n$ can be obtained by the following simple pseudo code:

$$
\begin{aligned}
&s_n = 0 \\
&\textbf{for } n = 0 \text{ to } N - 1 \textbf{ do} \\
&\quad t'_n = (2 \times q_n - (s_n \gg 1) \times sgn(q_n)) \times \Delta \qquad\qquad (4)\\
&\quad s_{n+1} = 4\text{stateTransTable}[s_n][q_n \,\&\, 1] \\
&\textbf{end for}
\end{aligned}
$$

where $sgn(\cdot)$ specifies the signum function, $\Delta$ denotes the quantization step size; the operator "$\gg$" specifies a bit shift to the right, so that $(s_n \gg 1)$ indicates the quantizer used; the parity $p_n$ of the quantization index $q_n$ can be obtained by applying the bit-wise "and" operator & (two's complement arithmetic) according to $q_n \,\&\, 1$.

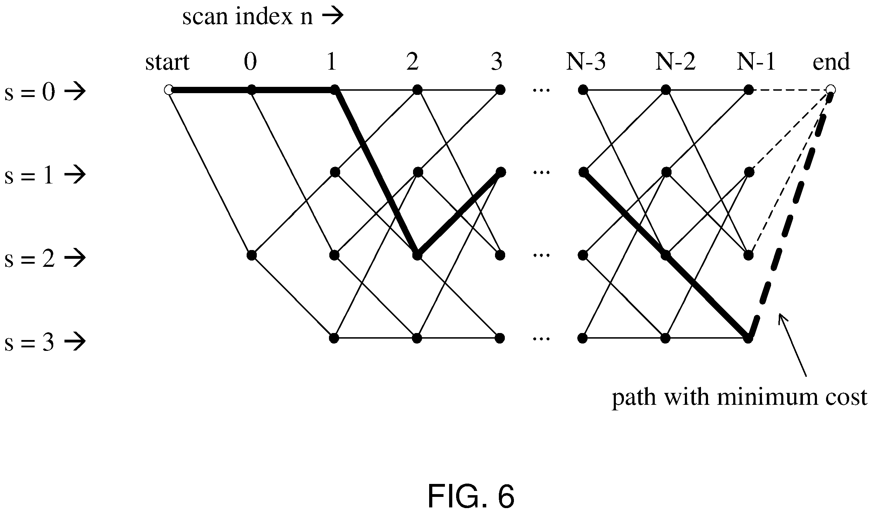

The selection of quantization indexes $q_n$ in the encoder aims at minimizing the rate-distortion cost, which is equivalent to finding the path through the trellis graph in DQ, depicted in FIG. 6, as given by the Viterbi algorithm. The trellis is processed in coding order, all possible transitions (connections of the trellis nodes) between a scan index $n - 1$ and a next scan index $n$ are evaluated, for each destination node, only the connection with the minimum rate-distortion cost $J_n$ is kept and the associated cost $J_n$ is assigned to the destination node. Therefore, all four trellis nodes for the current scan index $n$ have a single connection to a node for the preceding scan index $n-1$ in coding order.

This process is continued until $n = N - 1$, where 4 surviving paths through the trellis are obtained. At the end, the path with the minimum cost $J_{N-1}$ is selected among the 4 surviving paths. It is to be noted that each node is associated with a unique path through the trellis as all other connection were pruned in previous steps. Following the selected path having the minimum cost $J_{N-1}$ provides for collecting the sequence of quantization indexes $n = q_0, q_1, \cdots, q_{N-1}$ quantizing the N transform coefficients $t_n$ that are associated with the connections between the trellis nodes. An exemplary path with minimum cost is highlighted as bold line in FIG. 6.

In the current implementation of ECM, DQ is used with 8 quantization states. As noted above, the coding efficiency of trellis-coded quantization in VVC can be increased by increasing the number of quantization states (at the cost of a higher encoder complexity). DQ with 8 quantization states in addition to the current variant of DQ with 4 quantization state is supported in ECM (*"Additional support of dependent quantization with 8 states ", Document JVET-Q0243, 17th Meeting: Brussels, BE, 717 Jan. 2020*).

The 8-state based quantizer selection process is illustrated in Table 2 below, for transform coefficients $t_n$ with associated even states $s_n$ (which equal to 0, 2, 4 or 6), the quantizer $Q_0$ is used; and for transform coefficients $t_n$ with odd states $s_n$ (which equal to 1, 3, 5 or 7), the quantizer $Q_1$ is used. The associated 2-D array state transition table can be represented as:

$$8\text{stateTransTable}[\cdot][\cdot] = \{\{0,2\},\{5,7\},\{1,3\},\{6,4\},\{2,0\},\{4,6\},\{3,1\},\{7,5\}\}. \qquad (5)$$

**Table 2. 8-state transitions for quantizer selection.**

| state $s_n$ | quantizer used | next state $s_{n+1}$ | |
|---|---|---|---|
| | | $p_n = 0$ | $p_n = 1$ |
| 0 | $Q_0$ | 0 | 2 |
| 1 | $Q_1$ | 5 | 7 |
| 2 | $Q_0$ | 1 | 3 |
| 3 | $Q_1$ | 6 | 4 |
| 4 | $Q_0$ | 2 | 0 |
| 5 | $Q_1$ | 4 | 6 |
| 6 | $Q_0$ | 3 | 1 |
| 7 | $Q_1$ | 7 | 5 |

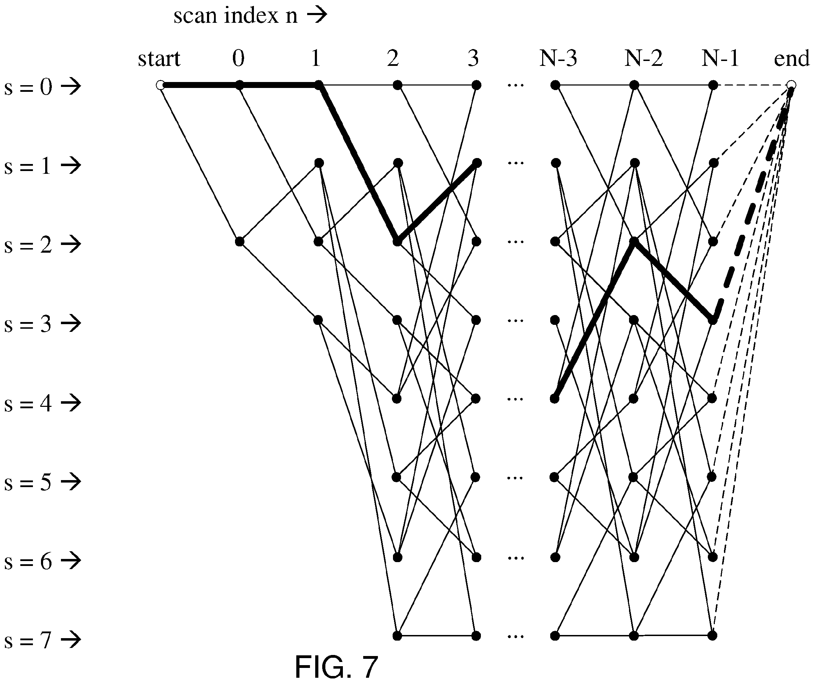

When DQ with 8 quantization states is applied, it yields 8 surviving paths through the trellis for determining the quantization indexes in the encoder, as depicted in FIG. 7. As the number of trellis states is increased, the achievable packing density in the signal space is increased, which results in the improvement of the coding efficiency. While at the same time, the number of surviving paths comparisons is increased, which results in the increase of the computational burdens.

For supporting both variants of dependent quantization (4 and 8 states) in a unified framework, the decoding process for the VVC variant of dependent quantization is re-written in ECM. The state transition table in Equation (3) is modified as:

$$4\text{stateTransTable}[\cdot][\cdot] = \{\{0,1\},\{2,3\},\{1,0\},\{3,2\}\}. \qquad (6)$$

The mapping of reconstructed transform coefficients $t'_n$ from quantization indexes $q_n$ in Equation (4) is modified as:

$$t'_n = (2 \times q_n - (s_n \,\&\, 1) \times sgn(q_n)) \times \Delta. \qquad (7)$$

Besides the mapping of transform coefficients level to intermediate quantization indexes, two more aspects for efficient entropy coding that depend on the quantization state s have also been re-written in ECM. Each quantization index $q$ is mapped to a sequence of bins, which are coded using the context-based adaptive binary arithmetic coding (CABAC) engine. There are two classes of bins: bins that are coded using adaptive probability models (i.e., in the regular mode of the coding engine) and bins that are transmitted in the bypass mode of the arithmetic coding engine. An absolute quantization index $|q|$ is mapped into the bins: *sig, gt1, par, gt3,* and the non-binary syntax element *rem.* At the decoder side, $|q|$ is constructed according to:

$$|q| = sig + gt1 + par + 2 \times (gt3 + rem). \qquad (8)$$

The bins *sig, gt1, par* and *gt3* are coded in the regular mode of the CABAC engine. The non-binary syntax element *rem* is binarized using Golomb-Rice and Exp-Golomb codes and the resulting bins are coded in bypass mode. The binarization is parameterized by a so-called Rice parameter. The quantization state s is applied on the context selection for *sig,* and the related derivation is re-written as:

$$sig\_ctxSet\,[\,s\,\&\,3\,] = \{\,0, 1, 0, 2\,\}. \qquad (9)$$

Another usage of quantization state s is the derivation of the mapping parameter ZeroPos for transform coefficient levels coded in bypass mode, which is re-written as:

$$ZeroPos = \big(\,1 + (s\,\&\,1)\big) \ll \text{rice parameter} \qquad (10)$$

where the operator "«" specifies a bit shift to the left.

Therefore, the decoding process is designed in a way that only the state transition table used depends on the selected variant of dependent quantization (4-state or 8-state versions); other remaining aspects are the same for both 4-state and 8-state versions of dependent quantization.

The used variant of DQ is indicated in the picture header (PH) or the picture parameter set (PPS). For that purpose, as shown in Table 3 below, the PH syntax element pic_dep_quant_enabled_flag is replaced by the syntax element pic_dep_quant_enabled_idc, which is coded using 2 bits.

**Table 3. The used variant of dependent quantization is indicated in the picture header or the picture parameter set.**

| ... | |
|---|---|
| if (!pps_dep_quant_enabled_idc ) | |
| | |
| pic_dep_quant_enabled_idc | u(2) |
| ... | |

As depicted in Table 4 below, the selection of the state transition table for a transform block would depend on pic_dep_quant_enabled_idc. pic_dep_quant_enabled_idc equal to 0 specifies that dependent quantization is disabled for slices associated with the PH. pic_dep_quant_enabled_idc equal to 1 specifies that dependent quantization with 4 states is used in slices associated with the PH, where the 2D-array 4stateTransTable in Equation (6) is used. pic_dep_quant_enabled_flag equal to 2 specifies that dependent quantization with 8 states is used in slices associated with the PH, where the 2D-array 8stateTransTable in Equation (5) is used.

**Table 4. The used variant of the state transition table for a transform block is decided by pic_dep_quant_enabled_idc.**

| residual_coding(x0, y0, log2TbWidth, log2TbHeight, cIdx) { | Descriptor |
|---|---|
| ... | |
| | |
| stateTab = pic_dep_quant_enabled_idc > 0 ? ( pic_dep_quant_enabled_idc > 1 ? 8stateTransTable : 4stateTransTable ) : 0 | |
| ... | |

As seen above, there are two different quantization methods which are used in existing video cmmpression systems. These are; i) Trellis Coded Quantization (TCQ) known as Dependent Quantization (DQ) and ii) Rate Distortion Optimized Quantization (RDOQ). RDOQ is inherited from the HEVC standard while DQ with 8 states TCQ was introduced in the current state-implementation of ECM. In ECM, the encoder can select between using either RDOQ or DQ depending on their performance. Statistically, majority of the time DQ is used. RDOQ uses data hiding technique called Sign Data Hiding (SDH) in order to improve performance. However, DQ cannot take benefit of data hiding techniques as implemented in RDOQ, because of infeasible implicit encoding of the data to be hidden.

Some embodiments described herein provide for a data hiding method that can be used in a quantization method that uses DQ.

In some embodiments, an enhanced number of TCQ states in DQ is used. That is, instead of 8 states, 16, 32, 64, 128 or 256 can be used for DQ and any arbitrary bit can be encoded in a state of a given transform coefficient. For example, the bit can be encoded into the parity of the state of the last transform coefficient's quantization index (last in reading order which is the lowest frequency component).

In other embodiments, multiple bits can be hidden in one transform block by grouping some certain number of consecutive nonzero values (for example 8 or 16 consecutive nonzero quantization indices can form a group) and hide one bit for each group's last coefficient's TCQ state.

Any arbitrary bits to be transmitted can be hidden within this technique. Since sign bits of the coefficients are transmitted explicitly in prior art, in some embodiment, sign bit of the coefficient is selected to be hidden in the implementation. However, any other bits can be hidden as well according to the same principle.

To find the quantization index of each transform coefficient, TCQ maps each coefficient to reconstruction points of two scalar quantizer (SQ) named Q0 and Q1. Which SQ is used for which transform coefficient is defined by the state of the coefficient. Thus, each coefficient has its own state (defined by a number from 0 to 8 in default TCQ). The first coefficient's state is always 0. The state of the remaining coefficients is defined by priorly given state transition table whose inputs are the previous coefficient's state and the parity of the quantization index where the output is the state of the current coefficient. Different quantization mapping creates different state to state path during encoding. Thus, the encoder selects the best path that gives the best rate distortion (RD) cost. For an 8-state TCQ, the encoder selects one path out of 8 possible selections. The selected path is known as the state of the last transform coefficient.

One solution is to hide a bit in the last coefficient's state. This can be done for example by the parity of the last coefficient's state. Such that if the last state is 0,2,4,6, the bit that the encoder hides is 1, if the last state is 1,3,5,7, the hidden bit is 0.

In another variant, possible last states are divided in two groups such that {0,1,2,3} and {4,5,6,7} and if the last state is in the first group, the hidden bit is 0, otherwise the hidden bit is 1. The grouping of the states can be selected arbitrarily. Since the decoder knows the state of the last coefficient, it can reconstruct the bit that is hidden.

However, in all these variants, the best path selected by the encoder is now selected among the possible states whose group is matched with the bit to be hidden (for example 4 paths are available in the variants above), while without the bit hiding the best path was selected out of 8 paths. For instance, if the possible last states are grouped as {0,1,2,3} and {4,5,6,7} for 1 and 0 hidden bit respectively and the bit to hide is 1, the encoder has to select the best path from {0,1,2,3}. If the global best path is within this group, there is no loss, but if the global best path in the other group, then a loss is expected. Statistically, 50% of the time, the global best path will be in the other group which is {4,5,6,7} in this example. The differences between RD cost of best path and RD cost of path in the selected group {0,1,2,3} will be the loss to implicitly encode the bit. If this RD cost differences is less than the cost of the number of the hidden bits in average, the codec performance is improved.

It appears that if there are fewer states, the RD cost of these fewer paths shows more variations. In other words, the global best path (i.e. the best path selected among the two groups) will be far better than the best path selected from the group hiding the bit, which renders difficult to improve compression performances using bit hiding when quantization is implemented with an 8-state DQ. On the other hand, if there are more states (preferably 16, 32, 64, 128 or even 256), the possible solutions converge and there will be almost no differences between the global best path and the best path in the selected group. Therefore, increasing the number of states for DQ allows to make bit hiding possible in DQ for improving compression efficiency.

Some embodiments provide a method for dependent quantization that uses more than 8 states wherein the state of one of the coefficients is used for hidding bits. For example, the last state (or the last state in the group) of the TCQ in DQ is used for implicit encoding of the bit to be hidden. Since this information (last state) is accessible in the decoder, any bit can be hidden. Preferably, the sign of the coefficient quantized in the last state is hidden.

The possible last states are divided in two groups where one group implicilty encodes a bit equals to 0 and another group implicitly encodes a bit equals to 1. The grouping can be balanced (i.e. each group has a same number of states) or unbalanced (i.e. there is a different number of states in each group).

In some variants, the grouping can be learned using statistics collected by state-of-the-art codecs runtime.

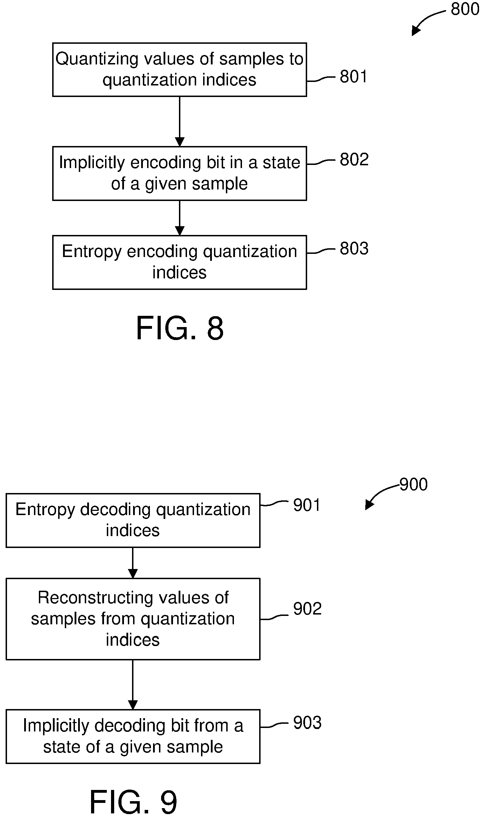

FIG. 8 illustrates an example of a method 800 for encoding a block of a video according to an embodiment. At 801, values of samples of the block are obtained. For example, the values of the samples correspond to transform coefficients issued from the transform module (225) of FIG. 2. In a variant, the samples of the block can be grouped and the steps are then performed for each group of samples. Values of the samples are quantized using dependent quantization having a given number of quantization states. In this embodiment, the given number of quantization states is higher than 8, for example it can be 16, 32, 64, 128, 256. It can be any number expressed in the form of $2^K$ with K being higher than 3. Each quantization state is associated with a quantizer that is used for quantizing a value of a sample that is in this quantization state.

In a variant, the quantization of the sample values can be done using a 16-state TCQ which is described in the following. However, it should be noted that this variant is one example and that other variants can be considered wherein DQ has more than 16 states and wherein state exchange is used or not.

In this variant, DQ is implemented using 16 quantization states among which 8 quantization states are dummy states.

As described above, in the DQ design, a state machine is applied to switch between the two scalar quantizers ($Q_0$ and ($Q_1$), where each quantization state is associated with one of the scalar quantizers. The current quantization state and, thus, the quantizer used for a current sample are uniquely determined by the previous state and the value of the previous quantization index.

Coding efficiency of trellis-coded quantization can be increased by increasing the number of states for the state machine but at the cost of a higher encoder complexity. Therefore, DQ with 8 states in addition to the variant of DQ with 4 quantization state is supported in ECM. However, since the rest of the part of the codecs were optimized for default number of states (8 in ECM), increasing the number of states is not a trivial task.

In a variant implementation described herein, additional quantization states are introduced in the 8-state DQ to increase the number of states of the DQ. The additional states are named in the following "dummy states". A dummy state is a quantization state that is associated to an original state of a DQ. For example, for a 16-state DQ, 8 dummy states are added to the 8 original states of the 8-state DQ, and each dummy state is associated with one of the original state of the 8-state DQ. A "dummy state" is a quantization state which act in a similar manner as its original state. Each original state has its own unique dummy state. In the document, a dummy state can also be named a secondary state.

In this variant, one dummy state is used for each original state. Thus, in this variant, for a 16-state DQ, there is 8 original states coming from the 8-state DQ design as described above and 8 dummy states. For a N-state DQ, there is N/2 original states (coming from an N/2-state DQ) and N/2 dummy states. Each original state from 0 to N/2-1 is associated with its respecitve dummy state from N/2 to N-1, with original state 0 associated with dummy state N/2, original state 1 associated with dummy state N/2+1, ... original state i associated with dummy state N/2+i.

The new states transition table (Table B) for the N-state DQ (for example 16-state DQ) can be created from a N/2 (for example 8) states transition table A (for example Table 2 for the 8-state DQ). The new N (16) states transition table (Table) B can be created as follows:

States from 0 to N-1 for table B are created where even states use $Q_0$ and odd states use $Q_1$. The first N/4 states of table B (states from 0 to N/4-1, first N/4 part of table B) correspond to the first N/4 states of Table A (states from 0 to N/4-1, first N/4 part of table A). The last N/4 states of table B (states from 3N/4 to N-1, last quarter part of table B) correspond to the last N/4 states of table A (last N/4 part of table A). The second N/4 states of table B (states from N/4 to N/2-1) correspond to the last N/4 states of table A to which N/2 is added to the states. The third N/4 states of table B (states from N/2 to 3N/4-1) correspond to the first N/4 state of table 4 to which N/2 is added to the states.

In this way, a state transition table can be obtained for q DQ having any number of states N, with N = $2^K$ and K> 3.

For example, for N=16 and table A is given in Table 2, the above algorithm produces the state transition table B shown in Table 5 below. In this table, the first 8 states are the original states and the last 8 are dummy ones, the (i+8)th state is the dummy state of ith.

| state $s_n$ | quantizer used | next state $s_{n+1}$ | |
|---|---|---|---|
| | | $p_n = 0$ | $p_n = 1$ |
| 0 | $Q_0$ | 0 | 2 |
| 1 | $Q_1$ | 5 | 7 |
| 2 | $Q_0$ | 1 | 3 |
| 3 | $Q_1$ | 6 | 4 |
| 4 | $Q_0$ | 10 | 8 |
| 5 | $Q_1$ | 12 | 14 |
| 6 | $Q_0$ | 11 | 9 |
| 7 | $Q_1$ | 15 | 13 |
| 8 | $Q_0$ | 8 | 10 |
| 9 | $Q_1$ | 13 | 15 |
| 10 | $Q_0$ | 9 | 11 |
| 11 | $Q_1$ | 14 | 12 |
| 12 | $Q_0$ | 2 | 0 |

(continued)

| state $s_n$ | quantizer used | next state $s_{n+1}$ | |
| --- | --- | --- | --- |
| | | $p_n = 0$ | $p_n = 1$ |
| 13 | $Q_1$ | 4 | 6 |
| 14 | $Q_0$ | 3 | 1 |
| 15 | $Q_1$ | 7 | 5 |

**Table 5. 16-state transitions for quantizer selection.**

For transform coefficients $t_n$ with associated even states $s_n$, the quantizer $Q_0$ is used; and for transform coefficients $t_n$ with odd states $s_n$, the quantizer $Q_1$ is used. The associated 2-D array 16-state transition table can be represented as:

$$16\text{stateTransTable}[\cdot][\cdot]$$
$$= \{\{0, 2\}, \{5, 7\}, \{1, 3\}, \{6, 4\}\{10, 8\}, \{12, 14\}, \{11, 9\}, \{15, 13\}, \{8, 10\}, \quad (11)$$
$$\{13, 15\}, \{9, 11\}, \{14, 12\}, \{2, 0\}, \{4, 6\}, \{3, 1\}, \{7, 5\}\}.$$

Alternatively, the state transition can also be specified in Equation (12) without a look-up table:

$$s_{n+1} = \left(((s_n \gg 2)\&1)! = ((s_n \gg 3)\&1)\right) ? 8 : 0 +$$
$$\left(stateTransTab \gg ((s_n > 8? s_n - 8 : s_n) \ll 3 + (q_n \& 1) \ll 2)\right) \& 15 \quad (12)$$

where the parameter *stateTransTab* specifies the default 8-states transition state transition table in Table 2. Using Eq 12, the default state transition table in Table 2 can be used as a core process to create the state transition table in Table 5.

The number of states can be extended to 2N (for example 32) by using N (for example 16) states table in Table 5 and the algorithm above. The number of states can then be increased as much as possible in practice (taking into account the increase of complexity).

Note that if the number of states continues to increase (i.e. $2^K > 16$), Equation (12) might need to be modified.

The decoding process is designed in a way that only the state transition table used depends on the selected variant of dependent quantization (using the 8-state DQ or 16-state DQ for example); other remaining aspects are the same for all versions of dependent quantization (4 states, 8 states and $2^K > 8$ states).

For example, in the context selection for the bin *sig* or the derivation of the mapping parameter ZeroPos which use the quantization state s of the current transform coefficient (as described above), there is no need to adapt the decoding process to the use of a DQ having a higher number of states than 8. This is becasue, in the example of 16 states, the extra 8 states are secondary states of the first 8 original states of the DQ with 8 states. For example, the secondary states (dummy states) and original states are associated as : 8-0, 1-9, ..7-15. So even if the state s of a transform coefficient is 15, the result for *sig* and ZeroPos would be the same whether the secondary state or the corresponding original state is used (15&3=7&3 and 15&1=7&1).

In another variant, for a DQ having a number of states higher than 8 states a state exchanging mechanism can be implemented during the encoding process for determining the best path.

In DQ, each state keeps one possible solution of RD optimized quantization indices. During the RD cost calculation, there are N possible solutions where the first N/2 possible solutions correspond to the last state being one of the original states, and the last N/2 possible solutions correspond to the last state being one of the dummy states. In this variant, at each value that is quantized, the solution (path) between a dummy state and its original state is exchanged if the dummy state's solution is better optimized than its original state. In other words, the path that lead to the dummy state is exchanged with the path that lead to its original state.

In this way, the best solution for the last state in coding order is always in the first N/2 states (original states). In practice, this variant provides better result than without state exchanging.

Back to FIG. 8, at 801, once the new state transition table is designed for the DQ with a number of states higher than 8, quantization of the values of the video block is performed in a similar manner as with the 8-state DQ using that the new state transition table.

At 802, one bit of information is implicitly encoded using the quantization state of the last sample in coding order. In the variant where the samples are grouped, one bit can be implictly encoded per group using the quantization state of the last sample of the group in coding order.

When using the variant with state exchange described above, it is to be noted that if the state of the last sample in coding order is one of a dummy state, its path is not exchanged with its original state if its RD cost is better than the RD cost of its original state. For example, if the bit is hidden in the state of the last scanned coefficient, there is no state exchange for the state of the last scanned coefficient. This allows to let all states to possibly have the global best path.

The hidden bit can carry any type of information.

In a variant, the hidden bit is a sign information of the last scanned coefficient of the block or the group.

To implicitly encode the bit, the states available for the last scanned sample are divided in two groups, for example in the 16-state DQ, a first group comprising the states {0,1,2,3,8,9,10,11} is used for hiding bit 0 and a second group comprising the states {4,5,6,7,12,13,14,15} is used for hiding bit 1.

To hide the sign of the last sample (in reading/coding order), the encoder selects the best path in the first or the second group depending of the value of sign to hide. This means if the sign of the last sample is positive, the encoder selects the best path from the second group {4,5,6,7,12,13,14,15}, if it is negative, the encoder selects the best path from the first group. In other variants, higher number of states TCQ can be used and the positive negative groups can be divided arbitrarily.

At 803, the quantization indices of the best selected path are entropy encoded.

In another embodiment, multiple bits can be hidden for the video block. To do that, a plurality of groups are obtained by grouping nonzero quantization indices. For instance, the groups can be created by every 8 or 16 or N nonzero quantization indices. One bit can then be hidden for each group. For example, the 16-state DQ design described above can be used or a higher state TCQ with or without state exchange.

In a variant where state exchange is used, the state for the last sample in the group is not exchanged to let all states to possibly have the global best path in the group.

To implicitly encode one bit per group, the states are divided into a first group (for example {0,1,2,3,8,9,10,11}) for hiding bit 0 and a second group (for example {4,5,6,7,12,13,14,15}) for hiding bit 1. For example, the sign of the last sample (in coding/reading order) in the group can be implcitly encoded. This means that if the sign of the last sample in the group is positive, the encoder selects the best path from the second group {4,5,6,7,12,13,14,15}, while if it is negative, the encoder selects the best path from the first group.

FIG. 9 illustrates an example of a method 900 for decoding a block of a video according to an embodiment. For example, the block is a transform and sample values to be reconstructed are transform coefficient. At 901, the quantization indices for the values of the block are entropy decoded. At 902, values of the samples of the block are dequantized from the quantization indices. That is samples of the block are assigned with reconstruction levels determined from the quantization index decoded for the sample using the reconstruction levels set of the quantizer used for the sample. The inverse quantization is the inverse of the quantization performed on the encoder, therefore the same embodiment used for quantization in FIG. 8 is used for FIG. 9. The quantizer is for a sample is determined from the state of the sample in the DQ process. As for FIG. 8, the DQ has a number of quantization states higher than 8. At 903, once the state of the last reconstructed sample allows to implicilty decode one bit. For example, it can be the sign of the last transform coefficient. For that, the states are divided into two groups in a similar manner as on the encoder side: one group encodes a 0 and the other group encodes a 1. If the state of the last reconstructed sample is in the first group, then the decoded bit is a 0, otherwise (the state is in the second group) the deocded bit is a 1.

As for the encoding method described in FIG. 8, multiple bits for the block can be implictly decoded by considering groups of non-zero quantization indices.

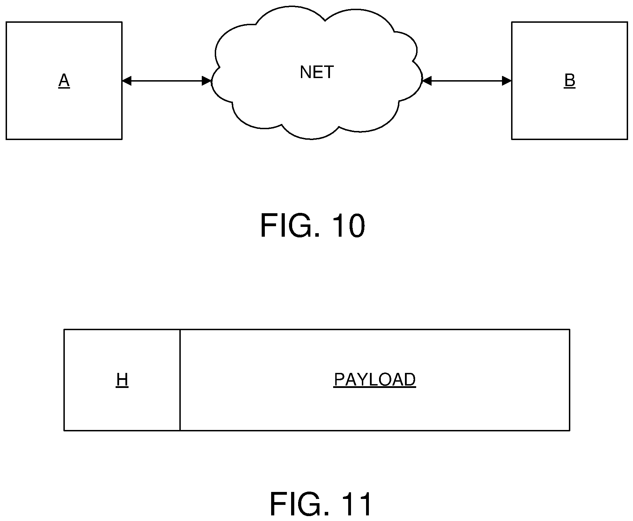

In an embodiment, illustrated in FIG. 10, in a transmission context between two remote devices A and B over a communication network NET, the device A comprises a processor in relation with memory RAM and ROM which are configured to implement a method for encoding a video according to any one of the embodiments described herein and the device B comprises a processor in relation with memory RAM and ROM which are configured to implement a method for decoding a video according to any one of the embodiments described herein. In accordance with an example, the network is a broadcast network, adapted to broadcast/transmit a coded video from device A to decoding devices including the device B.

FIG. 11 shows an example of the syntax of a signal transmitted over a packet-based transmission protocol. Each transmitted packet P comprises a header H and a payload PAYLOAD. In some embodiments, the payload PAYLOAD may comprise data representative of a video according to any one of the embodiments described above. The payload can also comprise any signaling as described above. For example, the signal comprises encoded quantized values of samples of at least one group of a block of the video, wherein one bit of information is implicitly encoded based on a quantization state of a last sample of the at least one group in encoding order.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:

a. SDP (session description protocol), a format for describing multimedia communication sessions for the purposes of session announcement and session invitation, for example as described in RFCs and used in conjunction with RTP (Real-time Transport Protocol) transmission.

b. DASH MPD (Media Presentation Description) Descriptors, for example as used in DASH and transmitted over HTTP, a Descriptor is associated to a Representation or collection of Representations to provide additional characteristic to the content Representation.

c. RTP header extensions, for example as used during RTP streaming.

d. ISO Base Media File Format, for example as used in OMAF and using boxes which are object-oriented building blocks defined by a unique type identifier and length also known as 'atoms' in some specifications.

e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described above. Features of these embodiments can be provided alone or in any combination, across various claim categories and types.

**Claims**

1.  A method, comprising, for at least one group of samples of a block of a video:

    quantizing values of samples of the at least one group using a plurality of quantizers assigned respectively to a plurality of quantization states of a dependent quantization, wherein the plurality of quantization states comprises more than 8 quantization states,
    implicitly encoding one bit of information based on a quantization state of a last sample of the at least one group in an encoding order.

2.  A method, comprising, for at least one group of samples of a block of a video:

    dequantizing values of samples of the at least one group using a plurality of quantizers assigned respectively to a plurality of quantization states of a dependent quantization, wherein the plurality of quantization states comprises more than 8 quantization states,
    implicitly decoding one bit of information based on a quantization state of a last sample of the at least one group in a decoding order.

3.  An apparatus comprising one or more processors operable to, for at least one group of samples of a block of a video:

    quantize values of samples of the at least one group using a plurality of quantizers assigned respectively to a plurality of quantization states of a dependent quantization, wherein the plurality of quantization states comprises more than 8 quantization states,
    implicitly encode one bit of information based on a quantization state of a last sample of the at least one group in an encoding order.

4.  An apparatus comprising one or more processors operable to, for at least one group of samples of a block of a video:
    dequantize values of samples of the at least one group using a plurality of quantizers assigned respectively to a plurality of quantization states of a dependent quantization, wherein the plurality of quantization states comprises more than 8 quantization states,
    implicitly decode one bit of information based on a quantization state of a last sample of the at least one group in a decoding order.

5.  The method of claim 1 or 2, wherein the bit of information is a sign of a value of one of the samples of the at least one group.

6.  The method of claim 1, 2 or 5, wherein samples of the at least one group are transform coefficients of a transform block.

7.  The method of any one of claims 1, 2 or 5-6, wherein the at least one group of samples comprises all samples of the block that have non-zero values.

8.  The method of any one of claims 1, 2 or 5-7, wherein the at least one group of samples comprises a given number of samples of the block in an encoding or decoding order that have non-zero values.

9.  The method of any one of claims 1, 2 or 5-8, wherein the plurality of quantization states comprises at least 16 quantization states.

10. The method of claim 1, wherein the plurality of quantization states are divided in a first group comprising one part of the quantization states and a second group comprising another part of the quantization states, the first group encoding a first value of the bit of information and the second group encoding a second value of the bit of information and wherein the quantization state of the last sample of the at least one group is selected as a state of quantization that provides a best rate-distortion cost in the first group or in the second group depending on a value of the bit of information to implicilty encode.

11. The method of claim 2, wherein the plurality of quantization states are divided in a first group comprising one part of the quantization states and a second group comprising another part of the quantization states, the first group encoding a first value of the bit of information and the second group encoding a second value of the bit of information and wherein a value of the bit of information is determined based on whether the quantization state of the last sample of the at least one group belongs to the first group or to the second group.

12. The method of claim 10 or 11, wherein the first group and the second group comprise a different number of quantization states.

13. The method of any one of claims 10-12, wherein the first group and the second group are determined using learned data.

14. The method of any one of claims 10-13, wherein each one of a first half of the quantization states is paired with respectively one of a second half of the quantization states, and when quantizing values of samples of the at least one group using the plurality of quantizers, responsive to a determination that for a current sample of the at least one group, a first cost determined for a first quantization state in the second half of the quantization states is better than a second cost determined for a second quantization state of the first half of the quantization state that is paired with the first quantization state, the first quantization state and the second quantization state are exchanged if the current sample is not the last sample of the at least one group in encoding order.

100A—

110

Processor

120

Memory

115

## FIG. 1A

100B

105

RF

COMP

USB

HDMI

110

Processor

120

Memory

115

Communication
Interface

— 150

160

Display Interface

170

Audio Interface

180

Peripheral
Interface

Communication Channel

190

## FIG. 1B

FIG. 1C

EP 4 633 155 A1

FIG. 2

300

| 330 | 335 | 340 | 350 |
|---|---|---|---|
| Entropy Decoding | Partitioning | Inverse Quantization | Inverse Transform |

355

Prediction Mode — 370

Intra Prediction

360

Motion Compensation — 375

Motion Refinement — 372

Reference Picture Buffer

380

In-loop Filters — 365

Post-decoding Processing

385

# FIG. 3

Q0

Q1

-4Δ   -3Δ   -2Δ   -Δ   0   Δ   2Δ   3Δ   4Δ

## FIG. 4

$p_n = 0$

**start state**

0

$p_n = 1$

1

Q0

$p_n = 1$

$p_n = 0$

$p_n = 0$

$p_n = 1$

Q1

2

$p_n = 1$

3

$p_n = 0$

## FIG. 5

FIG. 6

FIG. 7

800

| Quantizing values of samples to quantization indices | — 801 |

↓

| Implicitly encoding bit in a state of a given sample | — 802 |

↓

| Entropy encoding quantization indices | — 803 |

## FIG. 8

900

| Entropy decoding quantization indices | — 901 |

↓

| Reconstructing values of samples from quantization indices | — 902 |

↓

| Implicitly decoding bit from a state of a given sample | — 903 |

## FIG. 9

FIG. 10

FIG. 11

Europäisches
Patentamt

European
Patent Office

Office européen
des brevets

## EUROPEAN SEARCH REPORT

**Application Number**

EP 24 30 5555

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/008060 A1 (MEDIATEK INC [CN]) 11 January 2024 (2024-01-11) | 1-11 | INV. H04N19/124 |
| A | * page 1, line 7 - page 16, line 36 * <br> * figures 1-10 * | 12-14 | H04N19/176 H04N19/463 H04N19/467 |
| Y | BALCILAR (INTERDIGITAL) M ET AL: "Ahg12: 16 States TCQ with State Exchange", 145. MPEG MEETING; 20240122 - 20240126; ONLINE; (MOTION PICTURE EXPERT GROUP OR ISO/IEC JTC1/SC29/WG11), , no. m66005 22 January 2024 (2024-01-22), XP030315085, Retrieved from the Internet: URL:https://dms.mpeg.expert/doc_end_user/documents/145_Teleconference/wg11/m66005-JVET-AG0110-v4-JVET-AG0110_v4.zip JVET-AG0110_v4_clean.docx [retrieved on 2024-01-22] | 1-11 | H04N19/70 |
| A | * page 11 - page 3 * | 12-14 | |

**TECHNICAL FIELDS SEARCHED (IPC)**

H04N

The present search report has been drawn up for all claims

| Place of search | Date of completion of the search | Examiner |
|---|---|---|
| Munich | 30 August 2024 | Ernst, Jens |

EPO FORM 1503 03.82 (P04C01)

## ANNEX TO THE EUROPEAN SEARCH REPORT
## ON EUROPEAN PATENT APPLICATION NO.

EP 24 30 5555

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | Publication date | Patent family member(s) | Publication date |
|---|---|---|---|
| WO 2024008060 A1 | 11-01-2024 | TW 202420816 A<br>WO 2024008060 A1 | 16-05-2024<br>11-01-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Multiple sign bits hiding for high efficiency video coding. **WANG, J.** ; **YU, X.** ; **HE, D.** ; **HENRY, F.** ; **CLARE, G.** Visual Communications and Image Processing. IEEE, November 2012, 1-6

- Description of SDR, HDR and 360° video coding technology proposal by Fraunhofer HHI. *Document JVET J0014, 10th Meeting: San Diego, US, 10-20 Apr. 2018*, 10 April 2018
- Additional support of dependent quantization with 8 states. *Document JVET-Q0243, 17th Meeting: Brussels, BE*, 07 January 2020